# EUROPÄISCHE PATENTANMELDUNG

(11) **EP 0 786 205 A1**
(43) Veröffentlichungstag der Anmeldung: **30.07.1997**
(21) Anmeldenummer: 97101233.1
(22) Anmeldetag: 27.01.1997
(51) Int. Cl.: A01N 37/40, A01N 37/38, A01N 37/36, A01N 37/10

(54) **Mittel zur Hemmung des Algenwachstums**

(30) Priorität: 25.01.1996 DE 19602664
(71) Anmelder: Waltenberger, Karl-Hans, 82110 Germering (DE)
(72) Erfinder: Waltenberger, Karl-Hans, 82110 Germering (DE)
(74) Vertreter: Blumbach, Kramer & Partner

(57) **Zusammenfassung**

Die Erfindung betrifft Verbindungen und diese Verbindungen umfassende wäßrige zubereitungen als Mittel zum Inhibieren des Wachstums von Algen in wäßrigen Systemen, wobei die Verbindungen die allgemeine Formel (I) aufweisen 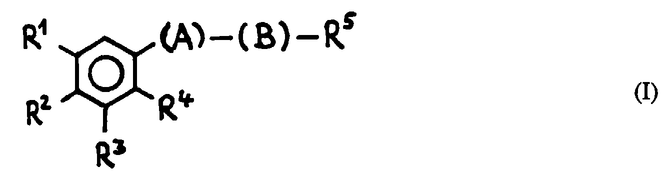 worin R¹, R² und R³ unabhängig voneinander für Wasserstoff, eine Hydroxygruppe oder eine Alkoxygruppe mit 1 bis 6 C-Atomen stehen, R⁴ für Wasserstoff oder eine Hydroxygruppe steht, A für eine Einfachbindung, eine geradkettige oder verzweigte, gesättigte oder ungesättigte Alkylengruppe mit 1 bis 3 C-Atomen steht, die mit einer Hydroxygruppe substituiert sein kann, B für eine Methylengruppe oder eine Carbonylgruppe steht und R⁵ für Wasserstoff oder eine Hydroxygruppe steht, oder 3-Hydroxybuttersäure und/oder 4-Hydroxybuttersäure sind.

## Beschreibung

Die Erfindung betrifft unsubstituierte und substituierte Vinylderivate des Benzols sowie substituierte Carbonsäurederivate als Mittel zum Inhibieren des Wachstums von Algen sowie wäßrige Zubereitungen, die derartige Verbindungen enthalten. Die Erfindung betrifft insbesondere 3-Phenylpropensäure und ihre Derivate sowie substituierte Buttersäuren als Mittel zum Inhibieren des Wachstums von Algen. Die Erfindung betrifft auch wäßrige Zubereitungen, die derartige Verbindungen enthalten, sowie deren Verwendung.

Algen sind in wäßrigen, von natürlichem oder künstlichem Licht erfaßten Systemen ubiquitär. Insbesondere in ausreichende Nährstoffmengen bzw. CO₂ enthaltenden wäßrigen Systemen finden Algen teilweise optimale Lebensverhältnisse und verbreiten sich dementsprechend schnell. Dies ist nicht immer erwünscht; mitunter wird es sogar durch Steuerung der Umgebungsbedingungen gezielt angestrebt, das Wachstum von Algen zu inhibieren. Stehende oder nahezu unbewegte natürliche Gewässer (z. B. Seen) mit aufgrund der Umgebungsbedingungen hohem Nährstoff-Gehalt oder zu hohem CO₂-Gehalt, Aquarien, Gartenteiche oder Schwimmbäder sind Beispiele für Systeme, in denen versucht wird, das Wachstum von Algen aus Gründen der Erhaltung des natürlichen Systems oder aus ästhetischen Gründen bei abgeschlossenen künstlichen Systemen zu inhibieren.

Gerade in künstlichen Systemen wie Aquarien, Gartenteichen oder Schwimmbädern werden zur Inhibierung des Algenwachstums zum Teil drastisch wirkende, zur Anwendung in natürlichen Systemen allemal ungeeignete chemische Mittel eingesetzt. Beispiele hierfür sind freies Chlor entwickelnde Chemikalien, die in Schwimmbädern eine mikrobizide und damit auch algizide Umgebung schaffen. Mit derartigen, Chlor generierenden Verbindungen läßt sich die Bildung von Algen verhindern. Alternativ können damit auch bereits gebildete Algen-Populationen oxidativ vernichtet werden.

Nachteil derartiger Chemikalien ist, daß sie aufgrund der breiten mikrobiziden Wirkung auch natürliche Populationen anderer Lebewesen nicht verschonen; darüber hinaus vertragen auch höhere Lebewesen wie Fische, Säuger und Menschen auf Dauer derartige Chemikalien nicht.

Als Algenvernichter in Aquarien ist Kupfersulfat (CuSO₄) bekannnt. Dieses wirkt jedoch ebenfalls toxisch auf niedere wie höhere Lebewesen; die Verwendung in Schwimmbädern, Aquarien und erst recht in natürlicher Umgebung ist damit auf Dauer nicht möglich.

In jüngerer Zeit wurden insbesondere für den Aquarienbereich Extrakte aus Torf und Stroh angeboten. Diese weisen jedoch den Nachteil auf, daß sie eine Wirkung erst nach längerer Zeit (z. B. 3 bis 6 Tagen) entfalten und damit auf Dauer nicht die gewünschte Wirkung (bzw. insbesondere in Aquarien eine zu kurz anhaltende Wirkung) zeigen. Auch Stroh selbst ist anwendbar, hat aber den praktischen Nachtell, daß sich eine Wirkung frühestens nach 6 Tagen zeigt und mitunter das Stroh vor einem Wirkungseintritt in Fäulnis übergehen kann, was eine massive Sauerstoffzehrung des Gewässers mit sich bringt.

Aufgabe der Erfindung war, bestimmte Verbindungen als Mittel zum Inhibieren des Wachstums von Algen bereitzustellen. Eine weitere Aufgabe war, wäßrige Zubereitungen, die derartige Verbindungen enthalten, als Mittel zum Inhibieren des Wachstums von Algen bereitzustellen. Dabei sollte insbesondere eine gute Verträglichkeit und biologische Abbaubarkeit auf längere Sicht gegeben sein. Es sollten zur Lösung dieser Aufgabe Verbindungen bereitgestellt werden, die in der Natur vorkommen und daher aus natürlichen Quellen gewonnen werden können.

Eine weitere Aufgabe der Erfindung war, geeignete Verbindungen in eine für die praktische Anwendung brauchbare Form zu bringen und insbesondere sicherzustellen, daß sich die geeigneten Verbindungen schnell und gleichmäßig in dem System verteilen lassen, in dem eine Inhibition des Algenwachstums erreicht werden soll. Insbesondere sollte sichergestellt werden, daß die genannten Verbindungen nur das Wachstum von Algen inhibieren, Mikroben oder höhere Lebewesen jedoch nicht schädigen. Insbesondere zur Verwendung im Aquarienbereich war sichzustellen, daß die entsprechenden Verbindungen keine Fischtoxizität aufweisen, sondern zu Umgebungsbedingungen führen, die das ungestörte Wachstum der Fischpopulation ermöglichen oder sogar fördern. Ein im Aquarienbereich erwünschter Effekt ist der sog. "Schwarzwasser-Effekt", d. h. eine Dunkelfärbung des (ansonsten klaren) Wassers, der sich wissenschaftlich noch nicht vollständig erklären läßt, jedoch erfahrungsgemäß besonders günstige Umgebungsbedingungen schafft und ein ausgesprochen gutes Wachstum der Fische garantiert.

Überraschend wurde nun gefunden, daß spezielle unsubstituierte oder substituierte Vinylderivate des Benzols und/oder substituierte Carbonsäuren in der Lage sind, die vorstehend genannten Aufgaben zu lösen. Insbesondere hat sich überraschenderweise gezeigt, daß spezielle Verbindungen der nachfolgend genannten allgemeinen Formel (I) sowie spezielle Hydroxycarbonsäuren geeignet sind, eine algizide Wirkung zu entfalten, ohne höhere Lebewesen wie Fische, Säuger u.ä. zu schädigen.

Die Erfindung betrifft also Verbindungen der allgemeinen Formel (I) 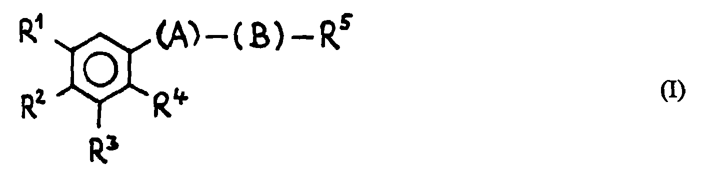 worin R¹, R² und R³ unabhängig voneinander für Wasserstoff, eine Hydroxygruppe oder eine Alkoxygruppe mit 1 bis 6 C-Atomen stehen, R⁴ für Wasserstoff oder eine Hydroxygruppe steht, A für eine Einfachbindung, eine geradkettige oder verzweigte, gesättigte oder ungesättigte Alkylengruppe mit 1 bis 3 C-Atomen steht, die mit einer Hydroxygruppe substituiert sein kann, B für eine Methylengruppe oder eine Carbonylgruppe steht und R⁵ für Wasserstoff oder eine Hydroxygruppe steht, als Mittel zum Inhibieren des Wachstums von Algen.

Die Erfindung betrifft außerdem 3-Hydroxybuttersäure oder 4-Hydroxybuttersäure als Mittel zum Inhibieren des Wachstums von Algen.

Die Erfindung umfaßt außerdem wäßrige Zubereitungen, die eine oder mehrere Verbindung(en) der allgemeinen Formel (I) enthalten 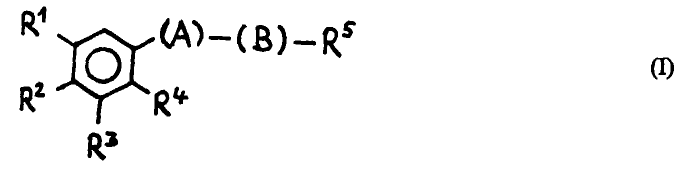 worin R¹, R² und R³ unabhängig voneinander für Wasserstoff, eine Hydroxygruppe oder eine Alkoxygruppe mit 1 bis 6 C-Atomen stehen, R⁴ für Wasserstoff oder eine Hydroxygruppe steht, A für eine Einfachbindung, eine geradkettige oder verzweigte, gesättigte oder ungesättigte Alkylengruppe mit 1 bis 3 C-Atomen steht, die mit einer Hydroxygruppe substituiert sein kann, B für eine Methylengruppe oder eine Carbonylgruppe steht und R⁵ für Wasserstoff oder eine Hydroxygruppe steht, als Mittel zum inhibieren des Wachstums von Algen.

Außerdem betrifft die Erfindung ein Verfahren zur Herstellung einer wäßrigen Zubereitung, wie sie vorstehend allgemein umschrieben wurde, das die Schritte umfaßt, daß man
- Wasser oder gegebenenfalls eine Mischung aus Wasser und einem oder mehreren Lösungsvermittler(n) oder gegebenenfalls einen oder mehrere Lösungsvermittler in wasserfreier Form vorlegt;
- eine oder mehrere Verbindung(en) der Formel (I) und/oder 3-Hydroxybuttersäure und/oder 4-Hydroxybuttersäure in kleinen Teilmengen unter Bewegen der vorgelegten Flüssigkeit oder Mischung zusetzt;
- mit Wasser unter Einstellen der gewünschten Konzentration des Wirkstoffes/der Wirkstoffe verdünnt und gegebenenfalls nach weiterem Rühren über eine zum Lösen des Wirkstoffes/der Wirkstoffe ausreichende Zeit von Ungelöstem abfiltriert.

Die Erfindung betrifft außerdem die Verwendung einer wäßrigen Zubereitung, wie sie vorstehend umschrieben wurde, zur Inhibierung des Wachstums von Algen, insbesondere zur Inhibierung des Wachstums von Algen in Schwimmbädern, in stehenden natürlichen Gewässern, in Gartenteichen oder in Aquarien.

Die Erfindung wird nachfolgend unter Bezugnahme auf spezielle Ausführungsformen beschrieben, ohne jedoch auf diese beschränkt zu sein. Insbesondere bedeutet die Tatsache, daß die Erfindung nachfolgend unter Bezugnahme auf die Inhibierung des Wachstums von Algen in künstlichen Aquarien beschrieben wird, keine Beschränkung der Erfindung auf dieses wäßrige System. Wie nachfolgend im einzelnen erläutert und auch anhand von Beispielen belegt wird, ist die Erfindung in gleicher Weise auch anwenbar auf andere wäßrige Systeme, und zwar sowohl auf natürliche als auch auf künstliche wäßrige Systeme.

Wenn in der vorliegenden Beschreibung und in den Patentansprüchen auf die Inhibierung des Wachstums von Algen Bezug genommen wird, sind in diesem Zusammenhang im weitesten Sinne Algen gemeint, wie sie in unerwünscht wachsenden Populationen sowohl in natürlichen als auch in künstlichen Systemen vorkommen, besonders Algenarten in Süßwasser-Systemen. Spezielle Algenarten sind in diesem Zusammenhang Grünalgen, Blaualgen, Pinselalgen oder Bartalgen, ohne jedoch auf diese beschränkt zu sein; eine Wirksamkeit ist nämlich auch gegenüber Meerwasser-Algen wie beispielsweise Rotalgen und Braunalgen gegeben.

Der Begriff "Inhibierung des Wachstums von Algen" wird im Zusammenhang mit den vorstehend genannten Algen nicht nur in der Weise verstanden, daß bereits gebildete Algen in ihrem Wachstum inhibiert werden und sich dadurch nicht mehr weiter entwickeln, d.h. nicht mehr weiter wachsen können. Vielmehr bedeutet in diesem Zusammenhang der Begriff "Inhibieren" auch, daß einem wäßrigen System zur Vorbeugung der Algenbildung die nachfolgend im einzelnen genannten Verbindungen zugesetzt werden können, wobei es im Einzelfall möglich ist (jedoch nicht zwingend sein muß), daß zur Vorbeugung eines Algenwachstums geringere Konzentrationen der erfindungsgemäß verwendeten Verbindungen eingesetzt werden.

Erfindungsgemäß wirksame Verbindungen weisen die nachfolgend angegebene allgemeine Formel (I) auf, 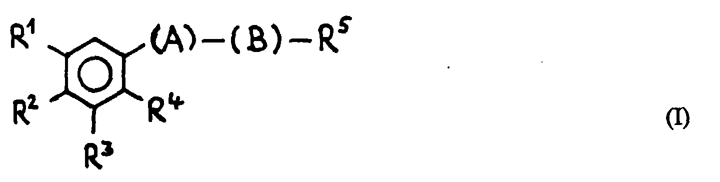 worin R¹, R² und R³ unabhängig voneinander für Wasserstoff, eine Hydroxygruppe oder eine Alkoxygruppe mit 1 bis 6 C-Atomen stehen, R⁴ für Wasserstoff oder eine Hydroxygruppe steht, A für eine Einfachbindung, eine geradkettige oder verzweigte, gesättigte oder ungesättigte Alkylengruppe mit 1 bis 3 C-Atomen steht, die mit einer Hydroxygruppe substituiert sein kann, B für eine Methylengruppe oder eine Carbonylgruppe steht und R⁵ für Wasserstoff oder eine Hydroxygruppe steht.

Spezielle Beispiele für Gruppen, für die die Substituenten R¹, R² und R³ unabhängig voneinander stehen können, sind Wasserstoff, eine Hydroxygruppe, eine Methoxygruppe, eine Ethoxygruppe, eine Propoxygruppe, eine Butoxygruppe, eine Pentoxygruppe oder eine Hexoxygruppe, wobei in den Alkoxygruppen die verschiedenen Isomere der jeweiligen Alkylgruppen an das Sauerstoffatom gebunden sein können.

Im Rahmen der vorstehenden allgemeinen Formel (I) können die Reste R¹, R² und R³ gleich oder verschieden sein. Beispiele für gleiche Reste R¹, R² und R³ finden sich in Verbindungen der allgemeinen Formel (I), in denen alle drei Reste für Wasserstoff oder eine Hydroxygruppe stehen können. Beispiele für gleiche Reste R¹ und R² (bei von den beiden genannten Resten verschiedenem Rest R³) finden sich in Verbindungen der allgemeinen Formel (I), in denen sowohl R¹ als auch R² für Wasserstoff oder für eine Hydroxygruppe stehen, während R³ beispielsweise umgekehrt für eine Hydroxygruppe oder für Wasserstoff oder auch für eine Methoxygruppe steht. Beispiele für gleiche Reste R¹ und R³ (bei von den beiden genannten Resten verschiedenem Rest R²) finden sich in Verbindungen der allgemeinen Formel (I), in denen R¹ und R³ für Wasserstoff oder eine Methoxygruppe stehen, während R² beispielsweise für eine Hydroxygruppe steht. Beispiele für unterschiedliche Reste R¹ und R² finden sich in Verbindungen der vorstehend genannten allgemeinen Formel (I), in der R¹ für Wasserstoff und R² für eine Hydroxygruppe steht oder in der R¹ für eine Methoxygruppe steht und R² für eine Hydroxygruppe steht.

In der vorstehend genannten allgemeinen Formel (I) steht R⁴ für Wasserstoff oder eine Hydroxygruppe.

In der vorstehend genannten allgemeinen Formel (I) steht A für eine Einfachbindung, eine geradkettige oder verzweigte, gesättigte oder ungesättigte Alkylengruppe mit 1 bis 3 C-Atomen, die mit einer Hydroxygruppe substituiert sein kann. Beispiele derartiger Gruppen sind (außer der Einfachbindung) eine Methylengruppe, eine Ethylengruppe (Dimethylengruppe), eine Vinylengruppe, eine Hydroxymethylengruppe und eine 1-Hydroxyethylengruppe. Wenn A für eine Einfachbindung steht, ist die Gruppe B unmittelbar an den Phenylring gebunden.

In der vorstehend genannten allgemeinen Formel (I) steht B für eine Methylengruppe oder eine Carbonylgruppe (die Gruppe >C=O). Die Gruppe R⁵ in der allgemeinen Formel (I) steht für Wasserstoff, eine Hydroxygruppe, eine Alkoxygruppe, bevorzugt eine solche, wie sie vorstehend für die Reste R¹ bis R³ definiert wurde, oder eine Gruppe -O⁻, die dann durch Alkalimetall-Ionen wie beispielsweise Li⁺, Na⁺ oder K⁺ oder durch Erdalkalimetall-Ionen wie beispielsweise Mg²⁺, Ca²⁺ oder Ba²⁺ neutralisiert sein kann. Eine Neutralisation der Gruppe -O⁻ kann statt mit Alkalimetall- oder Erdalkalimetall-Ionen in anderen Ausführungsformen der Erfindung auch durch Onium-Ionen erfolgen, wie dies aus dem Stand der Technik bekannt ist.

Beispielhafte Verbindungen der allgemeinen Formel (I) als Mittel zum Inhibieren des Wachstums von Algen, ohne auf diese beschränkt zu sein, sind: Benzoesäure, Salicylsäure, p-Hydroxybenzoesäure, Gallussäure, Vanillinsäure, Syringasäure, Phenylessigsäure, Mandelsäure, 3-Phenylpropionsäure, 3-Phenylmilchsäure, Zimtsäure, 2-Hydroxyzimtsäure, p-Cumarsäure, Kaffeesäure, Ferulasäure, Sinapinsäure, Vanillin, Zimtalkohol, 2-Hydroxyzimtalkohol, 4-Hydroxyzimtalkohol, Coniferylalkohol, Syringylalkohol und Sinapinalkohol.

Bevorzugte Verbindungen der allgemeinen Formel (I) als Mittel zum Inhibieren des Wachstums von Algen sind Zimtsäure, p-Cumarsäure, Kaffeesäure und Ferulasäure. Von den genannten Säuren können als Mittel zum Inhibieren des Wachstums von Algen die (in bezug auf die Doppelbindung) E-Isomere oder Z-Isomere verwendet werden. Bei Zimtsäure ist das Z-Isomere, bei p-Cumarsäure, Kaffeesäure und Ferulasäure sind die E-Isomere aufgrund ihrer weiten Verbreitung in Pflanzen und damit einer natürlichen Quelle zur Gewinnung dieser Verbindungen bevorzugt.

Weitere bevorzugte Verbindungen der allgemeinen Formel (I) sind Salicylsäure, p-Hydroxybenzoesäure, Gallussäure, Vanillinsäure und Syringasäure sowie 3-Phenylmilchsäure.

Es wurde auch gefünden, daß bestimmte substituierte Carbonsäuren wie beispielsweise 3-Hydroxybuttersäure und/oder 4-Hydroxybuttersäure als Mittel zum Inhibieren des Wachstums von Algen geeignet sind.

Im Rahmen der Erfindung kann eine oder können mehrere der oben genannten Verbindungen der allgemeinen Formel (I) oder auch eine oder mehrere der vorstehend genannten substiuierten Carbonsäuren wie z.B. 3- Hydroxybuttersäure oder 4-Hydroxybuttersäure als Mittel zum inhibieren des Wachstums von Algen verwendet werden. Bevorzugt ist, mehrere Verbindungen in Kombination miteinander zu verwenden. So hat sich bespielsweise im Rahmen der Erfindung überraschend gezeigt, daß Kombinationen aus Ferulasäure und p-Cumarsäure, Kombinationen aus Kaffeesäure, Ferulasäure und 4-Hydroxybuttersäure, Kombinationen aus Ferulasäure, Kaffeesäure, p-Cumarsäure und 4-Hydroxybuttersäure oder Kombinationen aus Zimtsäure, Gallussäure und 3-Phenylmilchsäure oder Kombinationen aus Zimtsäure, Gallussäure, dem Natriumsalz der 4-Hydroxybuttersäure und 3-Phenylmilchsäure eine synergistische Wirkung zeigen, d.h. die Wirkung einer Kombination der vorstehend genannten Verbindungen zeigt eine bessere algizide Wirkung als die additive Wirkung der genannten Einzelverbindungen. Beispielsweise zeigt Zimtsäure in einer bestimmten, relativ hohen Dosierung eine weniger gute Wirkung als eine Kombination aus Zimtsäure, Ferulasäure, Kaffeesäure und p-Cumarsäure mit einer geringeren Gesamtkonzentration der algizid wirksamen Verbindungen.

Erfindungsgemäß werden die vorstehend im einzelnen beschriebenen Verbindungen in Form wäßriger Zubereitungen formuliert. Die Erfindung betrifft daher auch wäßrige Zubereitungen, die eine oder mehrere Verbindung(en) der allgemeinen Formel (I) enthalten 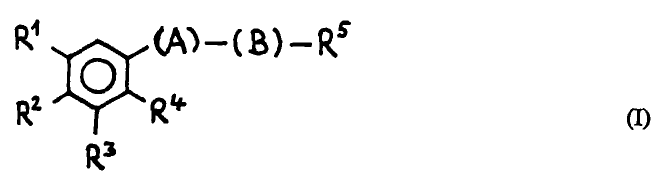 worin R¹, R² und R³ unabhängig voneinander für Wasserstoff, eine Hydroxygruppe oder eine Alkoxygruppe mit 1 bis 6 C-Atomen stehen, R⁴ für Wasserstoff oder eine Hydroxygruppe steht, A für eine Einfachbindung, eine geradkettige oder verzweigte, gesättigte oder ungesättigte Alkylengruppe mit 1 bis 3 C-Atomen steht, die mit einer Hydroxygruppe substituiert sein kann, B für eine Methylengruppe oder eine Carbonylgruppe steht und R⁵ für Wasserstoff oder eine Hydroxygruppe steht, als Mittel zum Inhibieren des Wachstums von Algen. Die Erfindung betrifft auch wäßrige, 3-Hydroxybuttersäure und/oder 4-Hydroxybuttersäure enthaltende Zubereitungen als Mittel zum Inhibieren des Wachstums von Algen.

Als Verbindungen der allgemeinen Formel (I) sind die vorstehend definierten Verbindungen ohne Ausnahme geeignet. Für die Definition der Reste R¹ bis R⁵, A und B sind die Definitionen maßgebend, die vorstehend bereits für die Verbindungen der Formel (I) genannt wurden.

Erfindungsgemäß eignen sich wäßrige Zubereitungen als Mittel zum inhibieren von Algen, die eine Verbindung der allgemeinen Formel (I) oder 4-Hydroxybuttersäure enthalten oder die mehrere Verbindungen der allgemeinen Formel (I) enthalten oder die eine oder mehrere Verbindung(en) der allgemeinen Formel (I) und 3-Hydroxybuttersäure und/oder 4-Hydroxybuttersäure enthalten. Besonders bevorzugt sind solche wäßrigen Zubereitungen, die Kombinationen aus Ferulasäure und p-Cumarsäure, Kombinationen aus Kaffeesäure, Ferulasäure und 4-Hydroxybuttersäure, Kombinationen aus Ferulasäure, Kaffeesäure, p-Cumarsäure und 4-Hydroxybuttersäure oder Kombinationen aus Zimtsäure, Gallussäure und 3-Phenylmilchsäure oder Kombinationen aus Zimtsäure, Gallussäure, dem Natriumsalz der 4-Hydroxybuttersäure und 3-Phenylmilchsäure enthalten. Wie bereits vorstehend angeführt, ergibt sich bei gemeinsamer Verwendung der vorstehend genannten Verbindungen eine synergistische Wirkung in bezug auf die Inhibierung des Algenwachstums.

Noch weiter bevorzugt sind solche wäßrigen Zubereitungen, die gemeinsam Zimtsäure, p-Hydroxybenzoesäure und 3-Phenylmilchsäure enthalten, wobei sich bei der Verwendung dieser Zubereitung kein sog. "Schwarzwasser-Effekt" ergibt, oder solche Zubereitungen, die Ferulasäure, Kaffeesäure, Zimtsäure und 4-Hydroxybuttersäure enthalten, wobei sich bei der Verwendung dieser Zubereitung der sog. "Schwarzwasser-Effekt" ergibt.

Es entspricht einer besonders bevorzugten Ausführungsform der Erfindung, daß die wäßrigen Zubereitungen zum Inhibieren des Wachstums von Algen zusätzlich zu einer oder zu mehreren der genannten Verbindungen einen oder mehrere Lösungsvermittler enthalten. Diese bevorzugte Ausführungsform der Erfindung ergibt sich daraus, daß ein Teil der Verbindungen der allgemeinen Formel (I) aufgrund des Phenyl-substituierten aromatischen Rests nur beschränkt in Wasser löslich ist und damit unter Umständen eine für die Inhibierung des Wachstums von Algen wirksame Menge der genannten Verbindungen nicht ohne weiteres in wäßriger Phase gelöst werden kann. Besonders bevorzugt kann eine Verbindung oder können mehrere Verbindungen aus der aus mehrwertigen Alkoholen bestehenden Gruppe verwendet werden. Mit Vorteil werden Glykole und Glycerin als Lösungsvermittler in den erfindungsgemäßen wäßrigen Zubereitungen verwendet. Beispielhaft für die genannte Stoffgruppe der Glykole sind Butyldiglykol und 1,2-Propylenglykol. Erfindungsgemäß kann auch ein Lösungsvermittler namens "APV^{R} spez." der Firma Hüls AG oder in geringen Mengen auch Ethanol verwendet werden.

In den erfindungsgemäßen wäßrigen Zubereitungen werden eine oder mehrere Verbindungen der Formel (I) und/oder 3-Hydroxybuttersäure und/oder 4-Hydroxybuttersäure in einer für das Inhibieren des Wachstums von Algen wirksamen Menge verwendet. Bevorzugt liegt die Gesamt-Wirkstoffkonzentration, d.h. die Gesamt-Konzentration einer oder mehrerer Verbindungen der Formel (I) und/oder von 3- oder 4-Hydroxybuttersäure, in einem Bereich von 0,1 bis 10 Gew.-%, bezogen auf das Gesamtgewicht der Zubereitung. Noch mehr bevorzugt ist eine Gesamt-Wirkstoffkonzentration von 0,5 bis 5 Gew.-%, bezogen auf das Gesamtgewicht der Zubereitung. Am meisten bevorzugt ist eine Wirkstoffkonzentration von 0,7 bis 2 Gew.-% einer oder mehrerer der Verbindungen der Formel (I) und/oder von 4-Hydroxybuttersäure, bezogen auf das Gesamtgewicht der wäßrigen Zubereitung, beispielsweise eine Gesamt-Wirkstoffkonzentration von 1 Gew.-%, bezogen auf das Gesamtgewicht der wäßrigen Zubereitung.

Die wäßrigen Zubereitungen zum Inhibieren des Wachstums von Algen enthalten einen oder mehrere Lösungsvermittler aus der oben genannten Gruppe in einer für das Lösen des Wirkstoffes bzw. der Wirkstoffe förderlichen Menge. Diese liegt in einer bevorzugten Ausführungsform der Erfindung bei einer Menge eines oder mehrerer Lösungsvermittler von 5 bis 25 Gew.-%, bezogen auf das Gesamtgewicht der Zubereitung, besonders bevorzugt bei einer Menge von 7 bis 10 Gew.-%, bezogen auf das Gesamtgewicht der Zubereitung.

Beispielhafte erfindungsgemäße wäßrige Zubereitungen, die zu besonders guten Ergebnissen in bezug auf die Inhibierung des Wachstums von Algen führen, sind Zubereitungen, die je 0,2 bis 0,6 Gew.-%, bezogen auf das Gesamtgewicht der Zubereitung, Ferulasäure, Kaffeesäure, p-Cumarsäure und 4-Hydroxybuttersäure (also 0,8 bis 2,4 Gew.-% an algizid wirksamen Verbindungen), 8 bis 24 Gew.-% Butyldiglykol und zum Rest entmineralisiertes Wasser (ad 100 Gew.-%) oder je 0,1 bis 0,5 Gew.-% Zimtsäure, p-Hydroxybenzoesäure, 4-Hydroxybuttersäure und 3-Phenylmilchsäure (also 0,4 bis 2,0 Gew.-% an algizid wirksamen Verbindungen), 4 bis 20 Gew.-% Butyldiglykol und zum Rest (ad 100 Gew.-%) entmineralisiertes Wasser oder 1,8 Gew.-% Zimtsäure, 1,0 Gew.-% des Natriumsalzes der 4-Hydroxybuttersäure (also 2,8 Gew.-% an algizid wirksamen Verbindungen), 12 bis 22 Gew.-%, beispielsweise 18 Gew.-%, Butyldiglykol und zum Rest (ad 100 Gew.-%) Wasser umfassen. Mit der erstgenannten Rezeptur läßt sich in besonders bevorzugter Weise der sog. "Schwarzwasser-Effekt" erzielen; die zweitgenannte Rezeptur erbringt keinen Schwarzwasser-Effekt; und die drittgenannte Rezeptur ist eine Rezeptur mit einer besonders milden, das Algenwachstum inhibierenden Wirkung.

Die vorstehend genannten wäßrigen Zubereitungen, die eine oder mehrere Verbindungen der allgemeinen Formel (I) und/oder 3-Hydroxybuttersäure und/oder 4-Hydroxybuttersäure als Wirkstoff(e) und gegebenenfalls zusätzlich einen oder mehrere Lösungsvermittler umfassen, werden nach einem erfindungsgemäßen Verfahren zur Herstellung einer wäßrigen Zubereitung hergestellt, das die Schritte umfaßt, daß man
- Wasser oder (für den Fall, daß ein oder mehrere Lösungsvermittler verwendet werden) gegebenenfalls eine Mischung aus Wasser und einem oder mehreren Lösungsvermittler(n) oder auch gegebenenfalls nur einen oder mehrere Lösungsvermittler in wasserfreier Form in einem geeigneten Gefäß vorlegt, das bevorzugterweise Vorrichtungen zum Rühren der Flüssigkeit aufweist, beispielsweise einen geeigneten Magnet - Rührstab und in Verbindung damit einen mit einem Magneten verbunden Rührmotor;
- eine oder mehere Verbindung(en) der allgemeinen Formel (I) und/oder 3-Hydroxybuttersäure und/oder 4-Hydroxybuttersäure in kleinen Teilmengen unter Bewegen der vorgelegten Flüssigkeit oder Mischung zusetzt; und
- die so erhaltene Mischung bzw. Lösung mit Wasser unter Einstellen der gewünschten Konzentration des Wirkstoffes bzw. der Wirkstoffe verdünnt und gegebenenfalls nach weiterem Rühren, das über eine zum Lösen des Wirkstoffes bzw. der Wirkstoffe ausreichende Zeit stattfindet, von Ungelöstem abfiltriert.

Mit Hilfe dieses Verfahrens wird eine eine definierte Konzentration des Wirkstoffes bzw. der Wirkstoffe aufweisende wäßrige Zubereitung erhalten, die gegebenenfalls einen oder mehrere Lösungsvermittler enthält. Diese wäßrige Zubereitung kann dann in geeignete Gefäße abgefüllt und gelagert bzw. zum Verkauf transportiert werden.

In einer bevorzugten Ausführungsform wird das Verfahren so geführt, daß man Wasser und Lösungsvermittler im Verhältnis von 3 : 1 bis 1 : 3, beispielsweise im Verhältnis 1 : 1, vorlegt. Dabei wird weiter bevorzugt der Lösungsvermittler in einer Menge verwendet, die zum Lösen der vorgesehenen Wirkstoffmenge mehr als ausreichend ist, beispielsweise in einer Menge, deren Gewicht dem 3- bis 10-Fachen des Gewichts an Wirkstoff oder - im Fall daß mehrere Wirkstoffe verwendet werden - der Wirkstoffe entspricht.

In einer bevorzugten Ausführungsform wird das Wasser oder die Mischung aus Wasser und einem oder mehreren Lösungsvermittler(n) geringfügig erwärmt, um den Lösevorgang zu erleichtern. Dies geschieht insbesondere im Hinblick darauf, daß die Verbindungen der allgemeinen Formel (I) in kaltem Wasser schlechter löslich sind als in warmen Wasser. Durch die Erwärmung läßt sich die Wirkung eines gegebenenfalls vorhandenen Lösungsvermittlers verbessern oder läßt sich ein solcher sogar entbehrlich machen.

Einer anderen, ebenfalls bevorzugten Ausführungsform entspricht es, den pH-Wert der wäßrigen Phase bei der Herstellung auf einen Wert im leicht alkalischen Bereich einzustellen, beispielsweise auf 7,5 bis 8,5, um den Lösevorgang zu erleichtern. Dadurch wird vermutlich die freie Säure der verwendeten Verbindungen in ein Alkalimetall- oder Erdalkalimetallsalz überführt, das in der Mehrzahl der Fälle besser in Wasser löslich ist als die freie Säure. Natürlich kann die Einstellung des pH-Wertes auch parallel zu einer Erwärmung der lösung vorgenommen werden.

Durch den abschließenden Schritt des Einstellens der gewünschten Konzentration des Wirkstoffes bzw. der Wirkstoffe in der wäßrigen Zubereitung stellt man eine zum Inhibieren des Algenwachstums wirksame Menge an einer oder mehreren Verbindung(en) der Formel (I) und/oder an 3-Hydroxybuttersäure und/oder an 4-Hydroxybuttersäure in der Zubereitung ein. Diese zum Inhibieren des Algenwachstums wirksame Menge an Wirkstoff liegt in einer bevorzugten Ausführungsform der Erfindung bei einer Konzentration von 0,1 bis 10 Gew.-% des Wirkstoffs, bezogen auf das Gesamtgewicht der Zubereitung. Als Wirkstoff werden für diese Konzentrationsangabe die Summe der Mengen möglicherweise vorhandener mehrerer Wirkstoffe angesehen. Noch mehr bevorzugt ist eine Gesamt-Wirkstoffkonzentration von 0,5 bis 5 Gew.-%, bezogen auf das Gesamtgewicht der Zubereitung. Am meisten bevorzugt ist eine Wirkstoffkonzentration von 0,7 bis 2 Gew.-% einer oder mehrerer der Verbindungen der Formel (I) und/oder von 3-Hydroxybuttersäure bzw. 4-Hydroxybuttersäure, bezogen auf das Gesamtgewicht der wäßrigen Zubereitung, beispielsweise eine Gesamt-Wirkstoffkonzentration von 1 Gew.-%, bezogen auf das Gesamtgewicht der wäßrigen Zubereitung.

Es entspricht einer weiteren, ebenfalls bevorzugten Ausführungsform des erfindungsgemäßen Verfahrens, daß man eine zum Lösen der Verbindung oder der Verbindungen der Formel (I) und/oder von 3-Hydroxybuttersäure und/oder von 4-Hydroxybuttersäure wirksame Konzentration an Lösungsvermittler in der Zubereitung einstellt. In einer noch mehr bevorzugten Ausführungsform liegt diese Konzentration im Bereich von 5 bis 25 Gew.-% eines oder mehrerer Lösungsvermittler in der Zubereitung, bezogen auf das Gesamtgewicht der Zubereitung, noch mehr bevorzugt im Bereich von 7 bis 10 Gew.-%,

Erfindungsgemäß werden die oben beschriebenen wäßrigen Zubereitungen zum Inhibieren des Wachstums von Algen verwendet. Dabei kann diese Inhibierung des Wachstums von Algen in natürlichen oder auch in künstlichen, d.h. von der natürlichen Umgebung abgeschlossen gehaltenen Systemen folgen. Natürliche Systeme können in diesem Zusammenhang beispielsweise stehende oder quasi-stehende natürliche Gewässer wie beispielsweise Seen sein, in denen ein Zufluß und Abfluß von Wasser nicht oder nur in einem anderen Bereich oder in dem betrachteten Bereich in nur sehr untergeordnetem Umfang erfolgt. Künstliche, d.h. von natürlicher Umgebung abgeschlossene Systeme sind beispielsweise Schwimmbäder, Gartenteiche oder Aquarien. Es entspricht einer ganz besonders bevorzugten Ausführungsform der Erfindung, die wäßrigen Zubereitungen, wie sie oben im einzelnen beschrieben wurden, zum Inhibieren des Wachstums von Algen in Aquarien zu verwenden. Diese wäßrigen Systeme sind insbesondere durch eine vergleichsweise hohe Temperatur, durch eine im Verhältnis zu natürlichen Systemen relativ hohe Nährstoffkonzentration, durch einen für das Wachstum der Algen förderlichen CO₂-Gehalt und durch eine oder mehrere Lichtquellen mit Licht von für die Photosythese geeigneten Wellenlängen gekennzeichnet. Alle vorstehend genannten Faktoren begünstigen das Wachstum von Algen, so daß in aquarianischen Systemen die Frage der Inhibierung des Wachstums von Algen traditionell eine wichtige Rolle spielt, die bisher aber nach wie vor nur unbefriedigend gelöst ist.

Gemäß einer besonders bevorzugten Ausführungsform der Erfindung werden die wäßrigen Zubereitungen in den genannten Systemen in solchen Mengen verwendet, daß eine wirksame Inhibierung des Wachstums von Algen erreicht werden kann. Beispielhaft wird dazu eine wie vorstehend zusammengesetzte wäßrige Zubereitung, wie sie als käufliches Produkt erhältlich gemacht werden soll, in einer Menge von 0,5 bis 50 ml pro 10 l des zu behandelnden Wassers zugesetzt. Eine nochmehr bevorzugte Konzentration ist eine Konzentration von 2 bis 8 ml der wäßrigen, als Konzentrat verwendeten Zubereitung auf 10 l zu behandelnden Wassers. Beispielhaft wird eine Menge des Konzentrats von 5 ml auf 10 l des zu behandelnden Wassers verwendet.

Die vorstehend genannte Menge der wäßrigen Zubereitung kann dem wäßrigen System in intermittierenden Zeitabständen auf einmal zugesetzt werden. Alternativ dazu ist es auch möglich, im Verlauf eines längeren Zeitraums von z.B. 1 Stunde, 5 Stunden, 12 Stunden, 1 Tag usw. eine bestimmte Menge der wäßrigen Zubereitung zuzusetzen. Eine weitere Alternative besteht darin, die wäßrige Zubereitung kontinuierlich in Tropfen-Mengen solange zuzusetzen, bis eine Menge im vorstehend angegebenen bevorzugten Bereich erreicht ist.

Eine alternative Form der Zugabe des Wirkstoffs kann darin bestehen, Verbindungen der allgemeinen Formel (I) und/oder 3-Hydroxybuttersäure und/oder 4-Hydroxybuttersäure als Mittel zum inhibieren des Wachstums von Algen in reiner Form, d.h. als Feststoff in von Wasser durchströmte oder mit Wasser in Kontakt stehende Behälter, Netze, Vliese, Preßlinge, Tabletten o.ä. einzubringen und diese in dem wäßrigen System (z.B. Aquarium, Gartenteich, Schwimmbad o.ä.) an geeigneter Stelle anzubringen. Aufgrund der vergleichsweise schlechten Löslichkeit der Verbindungen in Wasser löst sich die Festsubstanz bzw. lösen sich die Festsubstanzen nicht sofort vollständig, sondern nur in einer dem jeweiligen Lösungs- bzw. Sättigungsgleichgewicht entsprechenden Menge und werden in dem jeweiligen System verteilt. Geeignete Vorrichtungen, um die erfindungsgemäßen Verbindungen im Rahmen der letztgenannten Alternative in das wäßrige System einzubringen, sind dem Fachmann als solche bekannt und bedürfen daher an dieser Stelle keiner detaillierten Erläuterung.

Die Erfindung wird durch die nachfolgenden Rezepturbeispiele und Anwendungsbeispiele näher erläutert, ohne jedoch auf diese beschränkt zu sein. Die nachfolgenden Mengenangaben sind auf das Gewicht bezogene Angaben, soweit nichts anderes angegeben ist.

### Beispiel 1

### Algenwachstum inhibierendes Mittel mit Schwarzwasser-Effekt

Rezeptur:

| | |
|---|---|
| Ferulasäure | 0,5 Teile |
| Kaffeesäure | 0,5 Teile |
| Zimtsäure | 0,5 Teile |
| 4-Hydroxybuttersäure | 0,5 Teile |
| Butyldiglykol | 15,0 Teile |
| Wasser (entmineralisiert) | 83,0 Teile |

Herstellung: 15 Teile Butyldiglykol wurden mit 15 Teilen Wasser gemischt. Die algiziden Wirkstoffe wurden der Reihe nach unter Rühren zugegeben. Danach ließ man das Gemisch stehen und rührte es ca. alle 2 Stunden kräftig durch. Nach ca. 12 h hatten sich alle Wirkstoffe rückstandsfrei gelöst. Es wurde anschließend das restliche Wasser in 3 Portionen à ca. 23 Teilen unter Rühren zugegeben, wobei man vor Zugabe der nächsten Portion wartete, bis sich die frisch zugegebene Portion gleichmäßig verteilt hatte und eine klare Lösung entstanden war. Man filtrierte die Lösung über ein grobes Filter und erhielt so eine vollständig klare, bernsteinfarbene Lösung von schwachem Geruch.
Dosierung: 5 ml der wie vorstehend beschrieben erhaltenen Lösung pro 10 l Aquarienwasser (Beispiel: Aquarium mit 100 l Inhalt: 50 ml der Lösung).
Anwendung: Die für die richtige Dosierung erforderliche Menge der wäßrigen Lösung (50 ml) wurde in 3 Portionen à ca. 15 bis 20 ml dem Aquarienwasser zugegeben. Dies geschieht mit dem Ziel der raschen gleichmäßigen Verteilung möglichst in der Nähe des Ausströmers. Dabei wartete man mit der Zugabe der nächsten Portion, bis sich die bei der Zugabe der vorangehenden Portion entstandene momentane Trübung aufgelöst hatte, was nach wenigen Sekunden passiert war.
Wirksamkeit: Ein Wirkungseintritt war nach ca. 24 h zu erkennen. Vorhandene Algen wurden glasig und verloren ihre Farbe.
Etwa 12 h nach der Zugabe der algizid wirksamen Lösung färbte sich das Aquarienwasser bräunlich, blieb aber völlig klar. Diesen sog. "Schwarzwasser-Effekt" mögen viele Fische, was sich dadurch zeigt, daß ihre Färbung intensiver wird. Der "Schwarzwasser-Effekt" blieb eine Woche lang bestehen. Zur Aufrechterhaltung des Effekts genügte nach 1 Woche die Zugabe der halben Wirkstoffmenge, die zu einer hervorragenden Inhibierung des Algenwachstums vollauf ausreichend war.

### Beispiel 2

### Algenwachstum inhibierendes Mittel ohne Schwarzwasser-Effekt

Rezeptur:

| | |
|---|---|
| Zimtsäure | 1,0 Teile |
| p-Hydroxybenzoesäure | 0,3 Teile |
| 4-Hydroxybuttersäure | 0,5 Teile |
| 3-Phenylmilchsäure | 0,2 Teile |
| Butyldiglykol | 20,0 Teile |
| Wasser (entmineralisiert) | 78,0 Teile |

Herstellung: 20 Teile Butyldiglykol wurden mit 20 Teilen Wasser gemischt. Die algiziden Wirkstoffe wurden unter Rühren zugegeben. Danach ließ man das Gemisch stehen und rührte etwa jede Stunde kräftig durch. Nach etwa 12 Stunden hatten sich alle Wirkstoffe vollständig und klar gelöst. Man gab die restliche Wassermenge in 3 etwa gleichen Teilportionen zu, wobei man vor Zugabe der nächsten Portion wartete, bis sich die frisch zugegebene Portion gleichmäßig verteilt hatte und eine klare Lösung entstanden war. Man filtrierte die Lösung über ein grobes Filter und erhielt so eine vollständig klare, gelblichfarbene Lösung von schwachem Geruch.
Dosierung: 5 ml der wie vorstehend beschrieben erhaltenen Lösung pro 10 l Aquarienwasser (Beispiel: Aquarium mit 80 l Inhalt: 40 ml der Lösung).
Anwendung: Die für die richtige Dosierung erforderliche Menge der wäßrigen Lösung (40 ml) wurde in 3 Portionen à ca. 10 bis 15 ml dem Aquarienwasser zugegeben. Dies geschieht mit dem Ziel der raschen gleichmäßigen Verteilung möglichst in der Nähe des Ausströmers. Dabei wartete man mit der Zugabe der nächsten Portion, bis sich die bei der Zugabe der vorangehenden Portion entstandene momentane Trübung aufgelöst hatte, was nach wenigen Sekunden passiert war.
Wirksamkeit: Ein Wirkungseintritt war nach ca. 24 h zu erkennen. Vorhandene Algen wurden glasig und verloren ihre Farbe. Die algizide Wirkung konnte mit der halben Dosierungsmenge der algiziden Wirkstoffe über mehrere Wochen aufrechterhalten werden. Ein Schwarzwasser-Effekt trat nicht ein.

## Patentansprüche

1. Verbindungen der allgemeinen Formel (I) 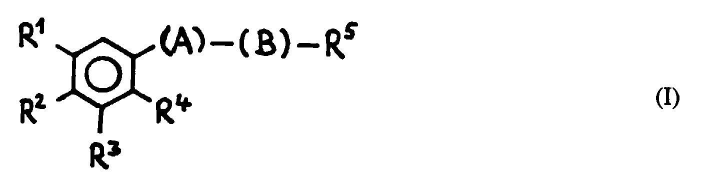 worin R¹, R² und R³ unabhängig voneinander für Wasserstoff, eine Hydroxygruppe oder eine Alkoxygruppe mit 1 bis 6 C-Atomen stehen, R⁴ für Wasserstoff oder eine Hydroxygruppe steht, A für eine Einfachbindung, eine geradkettige oder verzweigte, gesättigte oder ungesättigte Alkylengruppe mit 1 bis 3 C-Atomen steht, die mit einer Hydroxygruppe substituiert sein kann, B für eine Methylengruppe oder eine Carbonylgruppe steht und R⁵ für Wasserstoff oder eine Hydroxygruppe steht, als Mittel zum Inhibieren des Wachstums von Algen.

2. 3-Hydroxybuttersäure und/oder 4-Hydroxybuttersäure als Mittel zum Inhibieren des Wachstums von Algen.

3. Wäßrige Zubereitung, enthaltend eine oder mehrere Verbindung(en) der allgemeinen Formel (I) 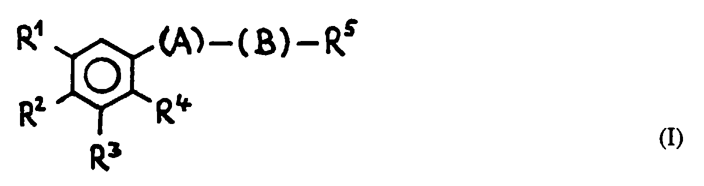 worin R¹, R² und R³ unabhängig voneinander für Wasserstoff, eine Hydroxygruppe oder eine Alkoxygruppe mit 1 bis 6 C-Atomen stehen, R⁴ für Wasserstoff oder eine Hydroxygruppe steht, A für eine Einfachbindung, eine geradkettige oder verzweigte, gesättigte oder ungesättigte Alkylengruppe mit 1 bis 3 C-Atomen steht, die mit einer Hydroxygruppe substituiert sein kann, B für eine Methylengruppe oder eine Carbonylgruppe steht und R⁵ für Wasserstoff oder eine Hydroxygruppe steht, als Mittel zum Inhibieren des Wachstums von Algen.

4. Wäßrige, 3-Hydroxybuttersäure und/oder 4-Hydroxybuttersäure enthaltende Zubereitung als Mittel zum Inhibieren des Wachstums von Algen.

5. Wäßrige, eine oder mehrere Verbindung(en) der allgemeinen Formel (I) nach Anspruch 3 und/oder 3-Hydroxybuttersäure und/oder 4-Hydroxybuttersäure enthaltende Zubereitung als Mittel zum Inhibieren des Wachstums von Algen.

6. Wäßrige Zubereitung nach einem oder mehreren der Ansprüche 3 bis 5, enthaltend zusätzlich einen oder mehrere Lösungsvermittler.

7. Verfahren zur Herstellung einer wäßrigen Zubereitung nach einem oder mehreren der Ansprüche 3 bis 6, umfassend die Schritte, daß man
- Wasser oder gegebenenfalls eine Mischung aus Wasser und einem oder mehreren Lösungsvermittler(n) oder gegebenenfalls einen oder mehrere Lösungsvermittler in wasserfreier Form vorlegt;
- eine oder mehrere Verbindung(en) der Formel (I) und/oder 3-Hydroxybuttersäure und/oder 4-Hydroxybuttersäure in kleinen Teilmengen unter Bewegen der vorgelegten Flüssigkeit oder Mischung zusetzt;
- mit Wasser unter Einstellen der gewünschten Konzentration des Wirkstoffes/der Wirkstoffe verdünnt und gegebenenfalls nach weiterem Rühren über eine zum Lösen des Wirkstoffes/der Wirkstoffe ausreichende Zeit von Ungelöstem abfiltriert.

8. Verwendung einer wäßrigen Zubereitung nach einem oder mehreren der Ansprüche 3 bis 6 zur Inhibierung des Wachstums von Algen.

9. Verwendung nach Anspruch 8 in einer Menge von 0,5 bis 50 ml der Zubereitung auf 10 l zu behandelnden Wassers.

10. Verwendung der Verbindungen der Ansprüche 1 und 2 in reiner Form in einem wasserdurchströmten oder mit Wasser in Kontakt stehenden Behälter, Netz, Vlies oder Stoff oder in einem Preßling oder in einer Tablette zur Inhibierung des Wachstums von Algen in einer dem Lösungs- bzw. Sättigungsgleichgewicht in dem umgebenden Wasser entsprechenden Konzentration.
